# EUROPEAN PATENT APPLICATION

(11) **EP 3 932 208 A1**
(43) Date of publication of application: **05.01.2022**
(21) Application number: 20762710.0
(22) Date of filing: 19.02.2020
(51) Int. Cl.: A23C 9/13, A23L 27/00, A23L 33/10, A23L 33/15, A23L 33/16, A23L 33/26

(54) **FOOD/BEVERAGE PRODUCT, OFF-FLAVOR MASKING AGENT FOR FOOD/BEVERAGE PRODUCT, AND OFF-FLAVOR MASKING METHOD FOR FOOD/BEVERAGE PRODUCT**

(30) Priority: 27.02.2019 JP 2019033536
(71) Applicant: Kabushiki Kaisha Yakult Honsha, Tokyo, 105-8660 (JP)
(72) Inventor: MIIDA Satoshi, Tokyo 105-8660 (JP); NIHEI Daichi, Tokyo 105-8660 (JP)
(74) Representative: Mewburn Ellis LLP
(86) International application number: PCT/JP2020/006528
(87) International publication number: WO 2020/175274

(57) **Abstract**

Provided are: a food/beverage product containing dietary fiber, vitamins, and a calcium source, the food/beverage product made by ameliorating off-flavors resulting from said nutritional ingredients; an agent for masking off-flavor in the food/beverage product; and a method for masking off-flavor in the food/beverage product.

The food/beverage product contains stevia, dietary fiber, vitamins, and a calcium source. The agent for masking off-flavor in a food/beverage product containing dietary fiber, vitamins, and a calcium source, the off-flavor masking agent having stevia as an active ingredient. The method for masking off-flavor in a food/beverage product containing dietary fiber, vitamins, and a calcium source, the off-flavor masking method involving making the food/beverage product to be compounded with stevia. An acidic milk beverage is preferred as the food/beverage product.

## Description

### TECHNICAL FIELD

The present invention relates to a food/beverage product in which the blending of specific nutritional ingredients is enhanced and off-flavors arising from these nutritional ingredients are ameliorated. The present invention also relates to an agent for masking off-flavor in the food/beverage product and a method for masking off-flavor in the food/beverage product.

### BACKGROUND ART

Among the rise in health consciousness in recent years, there have been various proposals of food/beverage products having an enhanced blend of nutritional ingredients for purposes such as supplementing nutrients that are often deficient in a normal diet and enjoying specific nutritional functionality. For example, functionalities such as regulating the condition of the stomach and minimizing sugar absorption are known in dietary fiber such as indigestible dextrin and polydextrose. As vitamins, for example, vitamin C is known to be a nutrient that helps maintain the health of the skin and mucous membranes and has an antioxidant effect. In addition, for example, vitamin D is known to be a nutrient that promotes the absorption of calcium in the intestinal tract and aids in bone formation. Furthermore, for example, vitamin E is known to be a nutrient that protects lipids in the body from oxidation and helps maintain the health of cells by an antioxidant effect. Calcium is known to be a nutrient necessary for the formation of bones and teeth.

However, when these nutrients are blended into food/beverage products, it has been impossible to disregard the effects on the original flavors of the food/beverage products.

For example, in patent document 1, dietary fiber such as polydextrose has a certain unpleasant taste, and an attempt is made to ameliorate this with sucralose, which is known as a high-intensity sweetener. In addition, in patent document 2, an attempt is made to similarly ameliorate a vitamin odor with sucralose. Furthermore, in patent document 3, an attempt is made to mask the bitter aftertaste of calcium lactate with a top note flavor, which is the first flavor to be sensed when the product is tasted or consumed.

In patent document 4, an attempt is made to mask the bitterness of branched-chain amino acids or peptides containing branched-chain amino acids with stevia, which is known as a high-intensity sweetener. In addition, in patent document 5, an attempt is made to reduce or alleviate excessive astringency in various final products with stevia. Furthermore, in patent document 6, an attempt is made to use stevia to minimize the adverse taste of ammonium ions having a salty-taste-substituting action in a low-chlorinated soy-sauce-like seasoning.

### [Related Art Documents]

### [Patent Documents]

[Patent Document 1] Japanese Laid-Open Patent Application No. 2008-099681
[Patent Document 2] Japanese Laid-Open Patent Application No. 2015-130893
[Patent Document 3] Japanese Unexamined Patent Application No. 2011-505165
[Patent Document 4] Japanese Laid-Open Patent Application No. 2005-336078
[Patent Document 5] Japanese Laid-Open Patent Application No. 2006-61160
[Patent Document 6] Japanese Laid-Open Patent Application No. 2011-115142

### DISCLOSURE OF THE INVENTION

### [Problems the Invention is Intended to Solve]

However, according to the research performed by the present inventors, in food/beverage products containing a blend of dietary fiber, vitamins, and a calcium source, there have been cases in which the adverse tastes caused by those individual nutritional ingredients commingle and yield a peculiar off-flavor overall. In this respect, the sucralose described in patent documents 1 and 2 has had an insufficient effect of improving the off-flavor. In addition, in the top note flavor disclosed in patent document 3, it has been inevitable that an extra flavor is added to the food/beverage product. In addition, in patent documents 4 to 6, attempts were made to ameliorate the adverse tastes of specific ingredients with stevia, but there was no effect on dietary fiber, vitamins, calcium sources, and other nutritional ingredients. Furthermore, there was no effect of ameliorating the off-flavor produced as a whole when these ingredients commingle.

As such, an object of the present invention is to provide: a food/beverage product which contains dietary fiber, vitamins, and a calcium source, and in which off-flavors arising from these nutritional ingredients are ameliorated; an agent for masking off-flavor in the food/beverage product; and a method for masking off-flavor in the food/beverage product.

### [Means for Solving the Aforementioned Problems]

As a result of thoroughgoing research, the present inventors perfected the present invention upon discovering that the problems described above can be resolved with stevia, which is known as a high-intensity sweetener.

Specifically, a first aspect of the present invention provides a food/beverage product containing stevia, dietary fiber, vitamins, and a calcium source.

In the food/beverage product described above, the food/beverage product is preferably an acidic milk beverage.

In the food/beverage product described above, the dietary fiber is preferably polydextrose.

In the food/beverage product described above, the vitamins are preferably one or more selected from a group consisting of vitamin C, vitamin D, and vitamin E.

In the food/beverage product described above, the calcium source is preferably calcium lactate.

In the food/beverage product described above, the food/beverage product preferably contains at least sucrose and fructose as sweetening ingredients in addition to the stevia.

In the food/beverage product described above, the food/beverage product preferably has a solid content of 5 mass% or more and 25 mass% or less.

In the food/beverage product described above, the food/beverage product preferably contains 0.001 mass% or more and 0.05 mass% or less of the stevia, 1 mass% or more and 10 mass% or less of the dietary fiber, 0.1 mass% or more and 1 mass% or less of the calcium source, and 0.01 mass% or more and 5 mass% or less of the vitamins.

In the food/beverage product described above, the food/beverage product preferably contains sucrose and fructose in a total amount of 1 mass% or more and 20 mass% or less.

A second aspect of the present invention provides an agent for masking off-flavor in a food/beverage product containing dietary fiber, vitamins, and a calcium source, the off-flavor masking agent having stevia as an active ingredient.

A third aspect of the present invention provides a method for masking off-flavor in a food/beverage product containing dietary fiber, vitamins, and a calcium source, in which the food/beverage product is compounded with stevia.

### [Effect of the Invention]

According to the present invention, in food/beverage products containing a blend of dietary fiber, vitamins, and a calcium source, there have been cases in which the adverse tastes caused by those individual nutritional ingredients mix together and a peculiar off-flavor is produced as a whole, but it is possible to provide a food/beverage product in which this off-flavor is ameliorated with stevia, the blend of the nutritional ingredients is enhanced, and flavor is satisfactory.

### MODE FOR CARRYING OUT THE INVENTION

A food/beverage product according to the present invention contains stevia, dietary fiber, vitamins, and a calcium source.

Since stevia is known as a sweetener for foods and drinks, a material that can be used as such for food/beverage products is preferably used as the stevia. Specifically, it is preferable to use a material that contains, as the main ingredient of sweetness, steviol glycosides such as steviolside and rebaudioside A contained in the stevia (scientific name: *Stevia rebaudiana*) plant, which is a perennial plant of the *Asteraceae* family. It is preferable to use a material containing 50 mass% or more of steviol glycosides, which are extracts from the leaves of the stevia plant and which are the sweetness ingredient of stevia, in the solid content. The material more preferably contains 70 mass% or more of steviol glycosides, and even more preferably 80 mass% or more of steviol glycosides. In the case of these stevia extracts, the amount of ingredients other than steviol glycosides, which are the sweetness ingredient of stevia, preferably does not exceed 50 mass%, more preferably does not exceed 30 mass%, and even more preferably does not exceed 20 mass%. Furthermore, these stevia extracts may be used after having undergone an enzyme treatment that transfers sugar using α-glucosyltransferase, as desired, in order to improve the quality of the sweetness. Stevia that can be used as a sweetener for food/beverage products includes commercial products such as "Rebaudio AD" (trade name; MORITA CHEMICAL INDUSTRY), and such commercial products may be used. One such product may be used alone, or two or more may be used together.

As long as the dietary fiber can be used in food/beverage products, there are no particular limitations. The dietary fiber may be a water-soluble dietary fiber or a water-insoluble dietary fiber. Possible examples include: polydextrose, indigestible dextrin, soy polysaccharide, pectin, sodium alginate, glucomannan, guar gum, acacia gum, inulin, hemicellulose, cellulose, chitin, chitosan, lignin, glucan, agar, corn fiber, beet fiber, dietary fibers derived from psyllium seed coat; wheat bran; etc. One dietary fiber may be used alone, or two or more may be used together. Of these, polydextrose is preferably used from the standpoint of the effect of stevia in regard to masking off-flavors. Polydextrose is a polysaccharide obtained by polymerizing glucose, sorbitol, and citric acid under high temperature and high pressure, and is usually a composition in which anything from a monosaccharide to a polysaccharide having a molecular weight of several 10,000 is mixed. For example, since there are commercial products such as "Lytes"(in Japanese)(trade name of DANISCO CULTOR; average molecular weight: 1,200), such commercial products may be used.

As long as the vitamins can be used in food/beverage products, there are no particular limitations. The vitamins may be water-soluble vitamins or water-insoluble vitamins. Possible examples include vitamin A, vitamin B1, vitamin B2, vitamin B6, vitamin B12, vitamin C, vitamin D, vitamin E, niacin, pantothenic acid, folic acid, biotin, etc. One vitamin may be used alone, or two or more vitamins may be used together. However, from the viewpoint of nutritional supplementation, it is preferable to use two or more of vitamins in combination, and it is more preferable to use three or more vitamins in combination.

As long as the calcium source can be used in food/beverage products, there are no particular limitations. The calcium source may be water-soluble calcium or water-insoluble calcium. Possible examples include calcium lactate, calcium gluconate, calcium chloride, calcium carbonate, calcium phosphate, calcined shell calcium, calcined eggshell calcium, etc. Of these, calcium lactate is preferably used from the standpoint of the effect of stevia in terms of masking off-flavors. The term "calcium source" in the present specification means a calcium source such as those that are additionally contained, excepting those contained raw material derived from, *inter alia,* dairy raw material blended into food/beverage products. One calcium source may be used alone, or two or more may be used together.

There are no particular limitations as to the food/beverage product according to the present invention; possible examples include an acidic milk beverage, yogurt, a soft drink, etc.

The solid content in the food/beverage product according to the present invention is preferably 5 mass% or more and 25 mass% or less, more preferably 5 mass% or more and 20 mass% or less, and even more preferably 5 mass% or more and 15 mass% or less. For purposes such as the sweetness quality required in a food/beverage product, any other sweetening ingredients in addition to stevia may be included as desired. Possible examples of sweetening ingredients include sucrose, fructose, glucose, trehalose, maltose, erythritol, sorbitol, xylitol, maltitol, lactitol, palatinose, galactooligosaccharide, aspartame, somatin, sucralose, acesulfame potassium, etc. From the standpoint of the sweetness quality, at least sucrose and fructose are preferably included in addition to stevia. In addition, it is more preferable to not include a "high-intensity sweetener", or more specifically a sweetness ingredient that has a degree of sweetness of 50 times or more that of sucrose.

As pertains to the ingredient content of the food/beverage product, the stevia content is preferably 0.001 mass% or more and 0.05 mass% or less, more preferably 0.005 mass% or more and 0.05 mass% or less, and even more preferably 0.005 mass% or more and 0.02 mass% or less. The dietary fiber content is preferably 1 mass% or more and 10 mass% or less, more preferably 1 mass% or more and 5 mass% or less, and even more preferably 1 mass% or more and 3 mass% or less. The calcium source content is preferably 0.1 mass% or more and 1 mass% or less, more preferably 0.1 mass% or more and 0.5 mass% or less, and even more preferably 0.1 mass% or more and 0.3 mass% or less. The vitamin content is preferably 0.01 mass% or more and 5 mass% or less, more preferably 0.01 mass% or more and 1 mass% or less, and even more preferably 0.03 mass% or more and 0.5 mass% or less. In addition, when at least sucrose and fructose are included as other sweetness ingredients in addition to stevia as desired, the combined total content is preferably 1 mass% or more and 20 mass% or less, more preferably 3 mass% or more and 15 mass% or less, and even more preferably 5 mass% or more and 15 mass% or less.

The food/beverage product according to the present invention contains the above-described stevia, dietary fiber, vitamins, and calcium source, the stevia exhibits sweetness, and the stevia ameliorates the off-flavors produced as a whole from the mixing of the adverse tastes caused by the dietary fiber, vitamins, and calcium source blended in as nutritional enhancers. Specifically, stevia ameliorates the off-flavors produced as a whole from the mixing of the adverse tastes caused by the dietary fiber, vitamins, and calcium source blended into the food/beverage product as nutritional enhancers. Another aspect of the present invention is to provide an agent for masking off-flavor in a food/beverage product containing dietary fiber, vitamins, and a calcium source, the off-flavor masking agent having stevia as an active ingredient. Yet another aspect of the present invention is to provide a method for masking off-flavor in a food/beverage product containing dietary fiber, vitamins, and a calcium source, in which the food/beverage product is compounded with stevia. Whether or not the off-flavors have been ameliorated can be verified by a sensory evaluation, etc., in which a food/beverage product is prepared without blending in stevia, the degree of sweetness of the food/beverage product is substituted with other sweeteners such as sucrose and fructose, the other ingredients are blended in, and the resulting food/beverage product is compared with that of the present invention.

A food/beverage product to which the present invention can be applied is described in further detail below, using an acidic milk beverage as an example. The range of food/beverage products to which the present invention is applied is not limited to the range of acidic milk beverages described below.

The acidic milk beverage can be in various forms such as: a live-bacteria-type fermented milk which is obtained by using microorganisms such as lactic acid bacteria and bifidobacteria to ferment raw milk such as cow milk, goat milk, sheep milk, soy milk and other animal- and plant-derived liquid milk, defatted milk powder, whole milk powder or milk powder, and milk reduced from concentrated milk, the raw milk being unaltered or diluted with water; a milky beverage containing a fermented milk that has been sterilized; or a beverage in which an acid ingredient such as an organic acid or fruit juice is added to a milk ingredient such as kefir and the like to make the beverage acidic.

When the acidic milk beverage is prepared by fermenting a milk raw material by causing microorganisms to act thereon, there are usually no particular limitations as to the microorganisms used in the production of the beverage as long as the microorganisms are lactic acid bacteria or bifidobacteria that can be used in food/beverage products; possible examples include: *Lactobacillus casei, Lactobacillus acidophilus, Lactobacillus herveticas, Lactobacillus gasseri, Lactobacillus fermentum, Lactobacillus salivalius, Lactobacillus eugluti, Lactobacillus delbrueckii* subsp. *bulgaricus, Lactobacillus johnsonii,* and other *Lactobacillus* bacteria; *Streptococcus thermophilus* and other *Streptococcus bacteria; Lactococcus lactis* subsp. *lactis, Lactococcus lactis* subsp. *cremoris, Lactococcus plantarum, Lactococcus raffinolactis,* and other *Lactococcus* bacteria; *Enterococcus faecalis, Enterococcus faecium,* and other *Enterococcus* bacteria; and *Bifidobacterium breve, Bifidobacterium longum, Bifidobacterium infantis, Bifidobacterium adolescentis, Bifidobacterium bifidum, Bifidobacterium catenulatum, Bifidobacterium pseudocatenulatum, Bifidobacterium angulatum, Bifidobacterium lactis, Bifidobacterium animalis,* and other *Bifidobacterium* bacteria. One of these types of lactic acid bacteria or *Bifidobacterium* bacteria may be used alone, or two or more may be used together.

The microbial fermentation may involve the use of other microorganisms in addition to lactic acid bacteria and bifidobacterial. For example: the genera *Saccharomyces, Candida, Rhodotorula, Pichia, Schizosaccharomyces, Torula, Zygosaccharomyces,* and other yeasts; the genera *Aspergillus, Penicillium, Yurotium, Monascus, Micol, Neurospora, Rhizopus,* and other filamentous fungi; etc., may also be used.

There are no particular limitations as to the conditions and fermentation methods for allowing microorganisms to act on milk raw material, as long as conditions and methods used in the production of normal fermented milk are applied. For example, as a typical fermentation condition, fermentation may be performed at a temperature of 30-40°C until the pH reaches 3.0-4.0, and the fermentation method may be a method that is selected as appropriate from static fermentation, stirring fermentation, shaking fermentation, aeration fermentation, etc., and that is suitable for microorganisms used in fermentation.

When an acidic milk beverage is prepared with sour ingredients, various sour ingredients are preferably added to adjust the pH to 3.0-4.0. Preferable examples of ingredients that can be used as sour ingredients include: citric acid, lactic acid, acetic acid, malic acid, tartaric acid, and other organic acids; the juices of fruits such as lemon, grapefruit, lime, orange, strawberry, blueberry, peach, grape, apple; etc. One sour ingredient may be used alone, or two or more may be used together.

Other than blending in the above-described stevia, dietary fiber, vitamins, and calcium source, or a sweetness ingredient, etc., other than stevia that may be optionally included, the acidic milk beverage may be produced according to a normal method for producing an acidic milk beverage. There are no particular limitations as to the blending period and the blending method; ingredients may be added at any stage in the production process of the base pre-raw material, or at any stage in the entire production process of the acidic milk beverage. For example, a syrup may be prepared in advance, the syrup containing various sugars along with polydextrose or another dietary fiber, and also stevia, vitamins, a calcium source, etc., in prescribed ratios, fermented milk obtained by allowing microorganisms to act on the milk raw material may be separately prepared, and the syrup and the fermented milk may be mixed. In this case, the syrup may be prepared according to a conventional method; for example, in a typical preparation method, the syrup can be prepared by, *inter alia,* dissolving individual raw materials are in water heated to 70°C or higher, and sterilizing by a plate-sterilization at 112°C for 10 seconds.

In addition to the above-mentioned stevia, dietary fiber, vitamins, and calcium source, or sweetness ingredients other than stevia that may be optionally included, food materials that are normally blended into various food/beverage products can be blended into the acidic milk beverage thus obtained within a range that does not impair the effects obtained by the present invention. Possible examples of such food materials include: sucrose fatty acid ester, glycerin fatty acid ester, polyglycerin fatty acid ester, sorbitan fatty acid ester, lecithin, and other emulsifiers; cream, butter, sour cream, and other milk fats; citric acid, lactic acid, acetic acid, malic acid, tartaric acid, gluconic acid, and other acidulants; the juices of fruits such as lemon, grapefruit, lime, orange, strawberry, blueberry, peach, grape, and apple; magnesium, zinc, iron, manganese, and other minerals; and flavors such as yogurt-based, berry-based, orange-based, quince-based, perilla-based, citrus-based, apple-based, mint-based, grape-based, apricot-based, pair, custard cream, peach, melon, banana, tropical, herb-based, tea-based, and coffee-based.

The solid content of the resulting acidic milk beverage can typically be 5 mass% or more and 25 mass% or less, more typically 5 mass% or more and 20 mass% or less, and even more typically 5 mass% or more and 15 mass% or less. As a relative value when the degree of sweetness of a 10 mass% aqueous solution of sucrose is 100, the degree of sweetness typically may be 100-300, more typically may be 110-120, and even more typically can be 112-118. Despite the inclusion of the above-described dietary fiber, vitamins, and calcium source, the adverse tastes thereof are mix together the off-flavor produced as a whole is reduced, and the degree of sweetness is also moderate.

### EXAMPLES

Examples are given below to describe the present invention in further detail, but these examples do not in any way limit the scope of the present invention.

### [Test Example 1]

Using the formulation of a conventional acidic milk beverage as a base blend, an attempt was made to provide an acidic milk beverage further enhanced with dietary fiber, vitamins, and calcium as nutritional components. In this case, when polydextrose or another dietary fiber material is blended in, the solid content is increased commensurately, the obtained flavor is given a thick taste; accordingly, there has been a problem in that the flavor deviates from the conventional flavor concept. In view of this, it was decided to adjust the increase in solid content due to the dietary fiber by reducing sucrose and fructose, and to supplement the resulting decrease in sweetness with a high-intensity sweetener.

Specifically, acidic milk beverages composed of fermented lactic acid bacteria were prepared with the blends shown in Table 1. The fermented lactic acid bacteria were prepared by steps including: sterilizing an aqueous solution containing 15 mass% of defatted milk powder and 9 mass% of glucose-fructose liquid sugar at 121°C for 3 seconds; inoculating thereto a starter of *Lactobacillus casei*; and culturing to pH 3.6. A syrup was prepared by steps including: mixing the raw materials shown in Table 1 in advance; and sterilizing by a plate-sterilization at 112°C for 10 seconds. Water was added to the fermented lactic acid bacteria to create a pre-raw material liquid, 342.4 g parts by mass of syrup were added to 773.1 g parts by mass of the liquid, and the mixture was further diluted with diluted water to obtain the acidic milk beverages of Preparation Examples 1-1 to 1-3. In this case, using a weighted average value based on the known degree of sweetness of the sweetness ingredient used, each acidic milk beverage was prepared to have a degree of sweetness of 118 (equivalent to 11.8% by mass of sucrose).

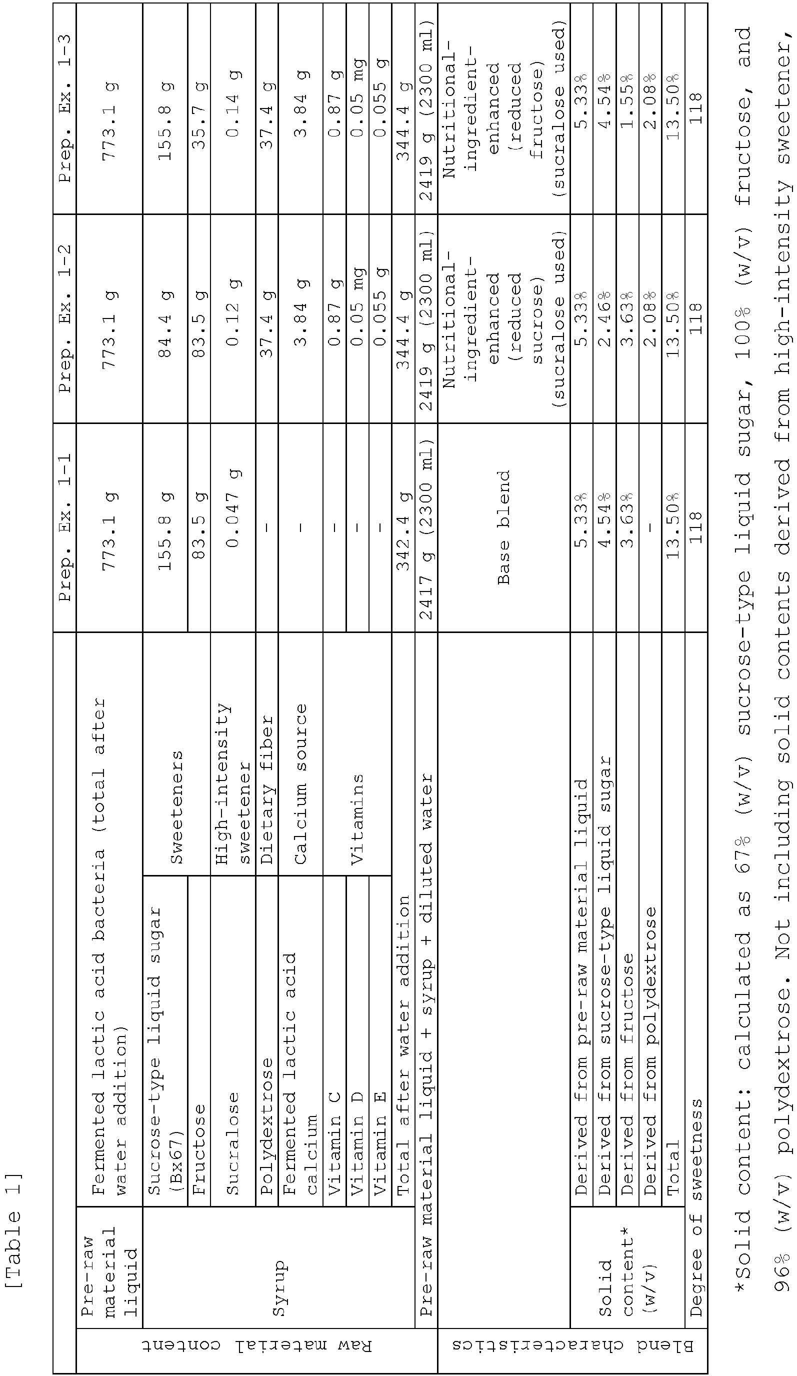

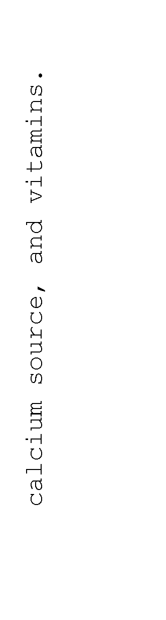

The resulting acidic milk beverages of Preparation examples 1-1 to 1-3 were examined after being stored at 10°C for 26 days, and the flavors of the beverages were evaluated by a person in charge. The results are shown in Table 2.

**[Table 2]**

| | | Prep. Ex. 1-1 | | Prep. Ex. 1-2 | | Prep. Ex. 1-3 | |
|---|---|---|---|---|---|---|---|
| Blend characteristics | | Base blend | | Nutritional-ingredient-enhanced (reduced sucrose) (sucralose used) | | Nutritional-ingredient-enhanced (reduced fructose) (sucralose used) | |
| Degree of sweetness | | 118 | | 118 | | 118 | |
| | | | | | | | |

| | | Descriptive assessment | Evaluation* | Descriptive assessment | Evaluation* | Descriptive assessment | evaluation* |
|---|---|---|---|---|---|---|---|
| Days stored | 0 days | Refreshing, Moderately sweet | ○ | Flat, Off-flavor in aftertaste | × | Moderately sweet, slight off-flavor in aftertaste | Δ |
| | 18 days | Refreshing, Slightly sour | ○ | Slightly sour, off-flavor in aftertaste | × | Slightly sour, off-flavor in aftertaste | × |
| | 26 days | Refreshing, Sour | ○ | Strong off-flavor in aftertaste, sour | × | Off-flavor in aftertaste, sour | × |

| | | | | | | | |
|---|---|---|---|---|---|---|---|
| *Evaluation ○: off-flavor not tasted, Δ: slight off-flavor tasted (within allowable range), ×: off-flavor stands out (beyond allowable range) | | | | | | | |

As a result, there were no problems in quality and properties in any of the preparation examples throughout the storage period of 26 days. However, in Preparation Examples 1-2 and 1-3 in which the nutritional ingredients were enhanced, it was determined that it was necessary to ameliorate the off-flavors derived from the nutritional ingredients. In a comparison between Preparation Example 1-2 in which sucrose was reduced and Preparation Example 1-3 in which fructose was reduced, the reduced-fructose example had a better body feeling, and the off-flavors derived from the nutritional ingredients tended to be comparatively difficult to taste.

### [Test Example 2]

In Test Example 1, it was clear that the off-flavor must be ameliorated when sucralose is used as the high-intensity sweetener; therefore stevia was used instead of sucralose as a high-sweetness sweetener, and the effect was examined.

During testing, in the reduced-fructose blend which had superior results to the reduced-sucrose blend in Test Example 1, an acidic milk beverage composed of fermented lactic acid bacteria was prepared using stevia (a stevia extract) instead of sucralose as a high-intensity sweetener. Specifically, the acidic milk beverages of Preparation Examples 2-1 to 2-3 in which sucralose was used and the acidic milk beverages of Preparation Examples 2-4 to 2-6 in which stevia was used were prepared in the same manner as in Test Example 1 with the blends shown in Table 3, and the beverages were compared. In this case, using a weighted average value based on the known degree of sweetness of the sweetness ingredient used, the acidic milk beverages of Preparation Examples 2-1 and 2-4 were prepared so that the degree of sweetness was 110 (equivalent to 11.0 mass% sucrose), the acidic milk beverages of Preparation Examples 2-2 and 2-5 were prepared so that the degree of sweetness was 115 (equivalent to 11.5 mass% sucrose), and the acidic milk beverages of Preparation Examples 2-3 and 2-6 were prepared so that the degree of sweetness was 120 (equivalent to 12.0 mass% sucrose).

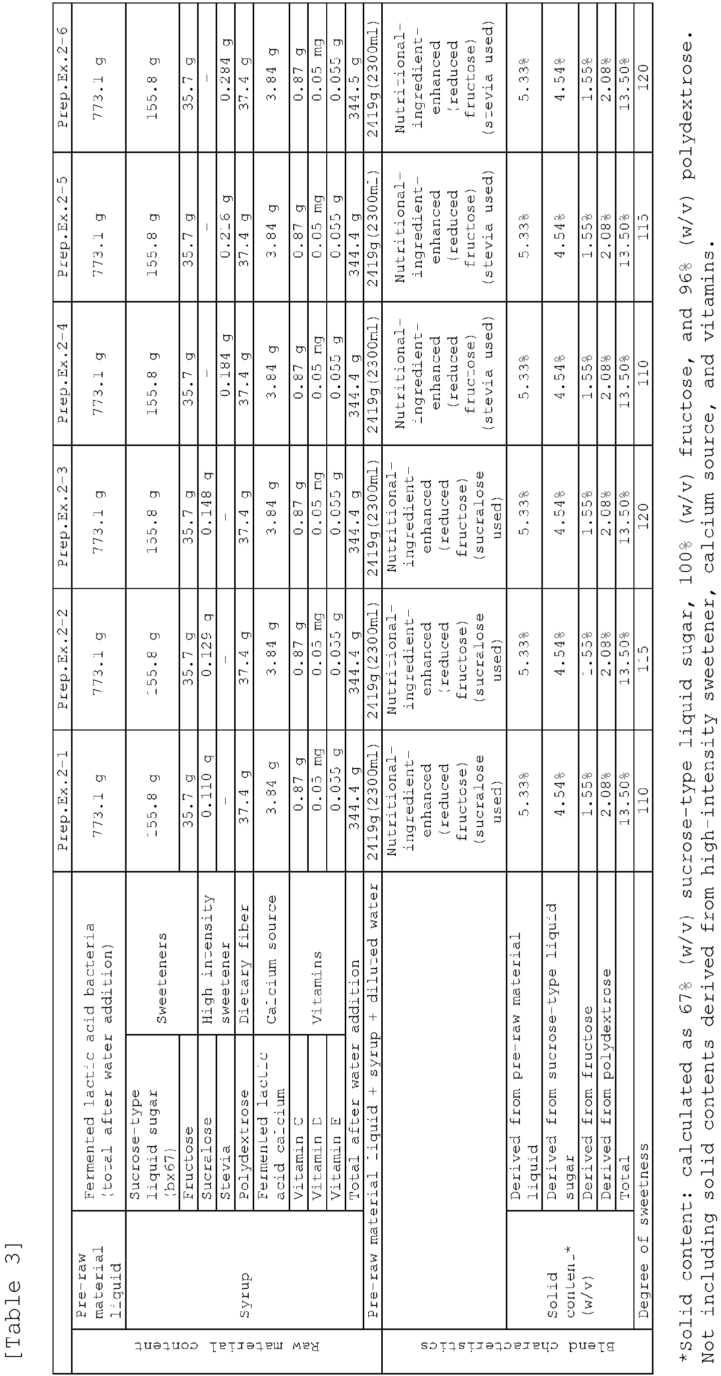

The resulting acidic milk beverages of Preparation examples 2-1 to 2-6 were examined after being stored at 10°C for 26 days, and the flavors of the beverages were evaluated by a person in charge, in the same manner as in Test Example 1. The results are shown in Table 4.

**[Table 4]**

| | | Prep.Ex.2-1 | | Prep.Ex.2-2 | | Prep.Ex.2-3 | | Prep.Ex.2-4 | | Prep.Ex.2-5 | | Prep.Ex.2-6 | |
|---|---|---|---|---|---|---|---|---|---|---|---|---|---|
| Blend characteristics | | Nutritional-ingredient-enhanced (reduced fructose) (sucralose used) | | Nutritional-ingredient-enhanced (reduced fructose) (sucralose used) | | Nutritional-ingredient-enhanced (reduced fructose) (sucralose used) | | Nutritional-ingredient-enhanced (reduced fructose) (stevia used) | | Nutritional-ingredient-enhanced (reduced fructose) (stevia used) | | Nutritional-ingredient-enhanced (reduced fructose) (stevia used) | |
| Degree of sweetness | | 110 | | 115 | | 120 | | 110 | | 115 | | 120 | |
| | | | | | | | | | | | | | |

| | | Desc. Ass. | Eval* | Desc. Ass. | Eval* | Desc. Ass. | Eval* | Desc. Ass. | Eval* | Desc. Ass. | Eval* | Desc. Ass. | Eval* |
|---|---|---|---|---|---|---|---|---|---|---|---|---|---|
| Days stored | 0 days | Refresh -ing aftertaste, slight off-flavor | Δ | Thick, slight off-flavor | Δ | Off-flavor after latter-half sweetness | × | Refresh -ing, smooth aftertaste, no hint of off-flavor in aftertaste | ○ | Good sweetness, refresh -ing, faint off-flavor in aftertaste | ○ | Has volume, perceptible residual sensation of sweetness, slight off-flavor in aftertaste | ○-Δ |
| | 26 days | Flat, sour, off-flavor in aftertaste | × | Thick, slight off-flavor stands out | Δ-× | Sweet, slight off-flavor stands out | Δ-× | Slight sourness stands out, slightly flat, slight off-flavor in aftertaste | Δ | Balanced, moderate thickness, stevia off-flavor does not stand out | ○ | Thick, slight sourness does not stand out much, some off-flavor in aftertaste | Δ |

| | | | | | | | | | | | | | |
|---|---|---|---|---|---|---|---|---|---|---|---|---|---|
| *Evaluation ○: off-flavor not tasted, Δ: slight off-flavor tasted (within allowable range), ×: off-flavor stands out (beyond allowable range) | | | | | | | | | | | | | |

As a result, as seen in a comparison between Preparation Example 2-1 and Preparation Example 2-4, a comparison between Preparation Example 2-2 and Preparation Example 2-5, and a comparison between Preparation Example 2-3 and Preparation Example 2-6, using stevia as the high-intensity sweetener used resulted in less off-flavor and more moderate sweetness in the acidic milk beverage obtained than using sucralose. Furthermore, when stevia was used and the sweetness was adjusted to 115, the sensuality after long-term storage was also favorable.

## Claims

1. A food/beverage product containing stevia, dietary fiber, vitamins, and a calcium source.

2. The food/beverage product according to claim 1, the food/beverage product being an acidic milk beverage.

3. The food/beverage product according to claim 1 or 2, the dietary fiber being polydextrose.

4. The food/beverage product according to any one of claims 1-3, the vitamins being one or more selected from the group consisting of vitamin C, vitamin D, and vitamin E.

5. The food/beverage product according to any one of claims 1-4, the calcium source being calcium lactate.

6. The food/beverage product according to any one of claims 1-5, the food/beverage product containing at least sucrose and fructose as sweetness ingredients in addition to the stevia.

7. The food/beverage product according to any one of claims 1-6, the food/beverage product having a solid content of 5 mass% or more and 25 mass% or less.

8. The food/beverage product according to any one of claims 1-7, the food/beverage product containing 0.001 mass% or more and 0.05 mass% or less of the stevia, 1 mass% or more and 10 mass% or less of the dietary fiber, 0.1 mass% or more and 1 mass% or less of the calcium source, and 0.01 mass% or more and 5 mass% or less of the vitamins.

9. The food/beverage product according to claim 8, the food/beverage product containing sucrose and fructose in a total amount of 1 mass% or more and 20 mass% or less.

10. An agent for masking off-flavor in a food/beverage product containing dietary fiber, vitamins, and a calcium source, the off-flavor masking agent having stevia as an active ingredient.

11. A method for masking off-flavor in a food/beverage product containing dietary fiber, vitamins, and a calcium source, in which the food/beverage product is compounded with stevia.
